# EUROPEAN PATENT APPLICATION

(11) **EP 4 769 958 A1**
(43) Date of publication of application: **01.07.2026**
(21) Application number: 25744460.4
(22) Date of filing: 09.01.2025
(51) Int. Cl.: H04B 1/401

(54) **SYSTEM, FIRST ELECTRONIC DEVICE AND SECOND ELECTRONIC DEVICE**

(30) Priority: 23.01.2024 CN 202410098569
(71) Applicant: Honor Device Co., Ltd., Shenzhen, Guangdong 518040 (CN)
(72) Inventor: YANG, Yulong, Shenzhen, Guangdong 518040 (CN); QIN, Hengliang, Shenzhen, Guangdong 518040 (CN)
(74) Representative: Goddar, Heinz J.
(86) International application number: PCT/CN2025/071505
(87) International publication number: WO 2025/157016

(57) **Abstract**

Embodiments of this application provide a system, a first electronic device, and a second electronic device, where the system includes the first electronic device and the second electronic device. The first electronic device includes: a first connector, where the first connector includes a first terminal, a second terminal, a third terminal, a fourth terminal, and a fifth terminal that are sequentially arranged; and a first signal end, a second signal end, a first voltage end, a second voltage end, and a switching circuit, where the first voltage end is configured to provide a first voltage, the second voltage end is configured to provide a second voltage, the first signal end is configured to perform transmission of a first differential signal, and the second signal end is configured to perform transmission of a second differential signal. The second electronic device includes: a second connector including a sixth terminal, a seventh terminal, an eighth terminal, a ninth terminal, and a tenth terminal that are sequentially arranged; and a functional device. The first electronic device and the second electronic device each include five terminals, thereby reducing space occupied by the devices and reducing costs.

## Description

This application claims priority to Chinese Patent Application No. 202410098569.X, filed with China National Intellectual Property Administration on January 23, 2024 and entitled "SYSTEM, FIRST ELECTRONIC DEVICE, AND SECOND ELECTRONIC DEVICE", which is incorporated herein by reference in its entirety.

### TECHNICAL FIELD

This application relates to the field of circuit technologies, and in particular, to a system, a first electronic device, and a second electronic device.

### BACKGROUND

A peripheral module of a terminal product uses a modularized solution, and needs to complete a forward and reverse insertion function of a pogo pin (pogoterminal). In a related technology, centrosymmetric distribution of a terminal sequence may be implemented by using a solution of seven terminals, thereby implementing the forward and reverse insertion function. However, a disadvantage is that a quantity of pogo pins is large, which results in large space occupation and high costs of a device.

### SUMMARY

In view of this, this application provides a system, a first electronic device, and a second electronic device, to help resolve a problem of large space occupation and high costs of a device in a conventional technology.

According to a first aspect, an embodiment of this application provides a system, including a first electronic device and a second electronic device.

The first electronic device includes:
a first connector, where the first connector includes a first terminal, a second terminal, a third terminal, a fourth terminal, and a fifth terminal that are sequentially arranged; and
a first signal end, a second signal end, a first voltage end, a second voltage end, and a switching circuit, where the first voltage end is configured to provide a first voltage, the second voltage end is configured to provide a second voltage, the first signal end is configured to perform transmission of a first differential signal, and the second signal end is configured to perform transmission of a second differential signal.

The first voltage end is electrically connected to the third terminal; and
the switching circuit is configured to: when the first terminal is connected to the first voltage end, control the first signal end to be connected to the second terminal, control the second signal end to be connected to the fourth terminal, and control the second voltage end to be connected to the fifth terminal; and control, and when the fifth terminal is connected to the first voltage end, control the first signal end to be connected to the fourth terminal, control the second signal end to be connected to the second terminal, and control the second voltage end to be connected to the first terminal.

The second electronic device includes:
a second connector, where the second connector includes a sixth terminal, a seventh terminal, an eighth terminal, a ninth terminal, and a tenth terminal that are sequentially arranged, where
the sixth terminal is electrically connected to the eighth terminal; and
a functional device, where the functional device includes a third signal end, a fourth signal end, a third voltage end, and a fourth voltage end; the third signal end is electrically connected to the seventh terminal, the fourth signal end is electrically connected to the ninth terminal, the third voltage end is electrically connected to the sixth terminal and the eighth terminal, and the fourth voltage end is electrically connected to the tenth terminal.

The third signal end is configured to perform transmission of the first differential signal, the fourth signal end is configured to perform transmission of the second differential signal, the third voltage end is configured to perform transmission of the first voltage, and the fourth voltage end is configured to perform transmission of the second voltage.

In a possible implementation, the switching circuit includes:
a first switching module, where the first switching module includes a selection signal end, and the selection signal end is electrically connected to the first terminal; and the first switching module is configured to: when at the selection signal end is the first voltage, control the first signal end to be connected to the second terminal and control the second signal end to be connected to the fourth terminal, and when at the selection signal end is the second voltage, control the first signal end to be connected to the fourth terminal and control the second signal end to be connected to the second terminal; and
a second switching module, where the second switching module is configured to: when at the first terminal is the first voltage, control the second voltage end to be connected to the fifth terminal, and when at the fifth terminal is the first voltage, control the second voltage end to be connected to the first terminal.

In a possible implementation, the second switching module includes:
a first switch unit, where a first terminal of the first switch unit is electrically connected to the second voltage end, a second terminal of the first switch unit is electrically connected to the first terminal, a control end of the first switch unit is electrically connected to the fifth terminal, the control end of the first switch unit is electrically connected to the second voltage end through a first resistance module, and the first switch unit is turned on in response to the first voltage at the control end and turned off in response to the second voltage at the control end; and
a second switch unit, where a first terminal of the second switch unit is electrically connected to the second voltage end, a second terminal of the second switch unit is electrically connected to the fifth terminal, a control end of the second switch unit is electrically connected to the first terminal, the control end of the second switch unit is electrically connected to the second voltage end through a second resistance module, and the second switch unit is turned on in response to the first voltage at the control end and turned off in response to the second voltage at the control end.

In a possible implementation, the second switching module further includes:
a third resistance module, where the control end of the first switch unit is electrically connected to the fifth terminal through the third resistance module;
a fourth resistance module, where the control end of the second switch unit is electrically connected to the first terminal through the fourth resistance module; and
a fifth resistance module, where the selection signal end is electrically connected to the first terminal through the fifth resistance module.

In a possible implementation, the first voltage is at a low level, and the second voltage is at a high level; or
the first voltage is at a high level, and the second voltage is at a low level.

In a possible implementation, the first electronic device includes a notebook computer, the second electronic device includes a pluggable camera device.

According to a second aspect, an embodiment of this application provides a first connection assembly. The first connection assembly includes:
a first connector, where the first connector includes a first terminal, a second terminal, a third terminal, a fourth terminal, and a fifth terminal that are sequentially arranged; and
a first signal end, a second signal end, a first voltage end, a second voltage end, and a switching circuit, where the first voltage end is configured to provide a first voltage, and the second voltage end is configured to provide a second voltage.

The first voltage end is electrically connected to the third terminal; and
the switching circuit is configured to: when the first terminal is connected to the first voltage end, control the first signal end to be connected to the second terminal, control the second signal end to be connected to the fourth terminal, and control the second voltage end to be connected to the fifth terminal; and control, and when the fifth terminal is connected to the first voltage end, control the first signal end to be connected to the fourth terminal, control the second signal end to be connected to the second terminal, and control the second voltage end to be connected to the first terminal.

In a possible implementation, the switching circuit includes:
a first switching module, where the first switching module includes a selection signal end, and the selection signal end is electrically connected to the first terminal; and the first switching module is configured to: when at the selection signal end is the first voltage, control the first signal end to be connected to the second terminal and control the second signal end to be connected to the fourth terminal, and when at the selection signal end is the second voltage, control the first signal end to be connected to the fourth terminal and control the second signal end to be connected to the second terminal; and
a second switching module, where the second switching module is configured to: when at the first terminal is the first voltage, control the second voltage end to be connected to the fifth terminal, and when at the fifth terminal is the first voltage, control the second voltage end to be connected to the first terminal.

In a possible implementation, the second switching module includes:
a first switch unit, where a first terminal of the first switch unit is electrically connected to the second voltage end, a second terminal of the first switch unit is electrically connected to the first terminal, a control end of the first switch unit is electrically connected to the fifth terminal, the control end of the first switch unit is electrically connected to the second voltage end through a first resistance module, and the first switch unit is turned on in response to the first voltage at the control end and turned off in response to the second voltage at the control end; and
a second switch unit, where a first terminal of the second switch unit is electrically connected to the second voltage end, a second terminal of the second switch unit is electrically connected to the fifth terminal, a control end of the second switch unit is electrically connected to the first terminal, the control end of the second switch unit is electrically connected to the second voltage end through a second resistance module, and the second switch unit is turned on in response to the first voltage at the control end and turned off in response to the second voltage at the control end.

In a possible implementation, the second switching module further includes:
a third resistance module, where the control end of the first switch unit is electrically connected to the fifth terminal through the third resistance module;
a fourth resistance module, where the control end of the second switch unit is electrically connected to the first terminal through the fourth resistance module; and
a fifth resistance module, where the selection signal end is electrically connected to the first terminal through the fifth resistance module.

In a possible implementation, the first voltage is at a low level, and the second voltage is at a high level; or
the first voltage is at a high level, and the second voltage is at a low level.

According to a third aspect, an embodiment of this application provides a second connection assembly. The second connection assembly includes:
a second connector, where the second connector includes a sixth terminal, a seventh terminal, an eighth terminal, a ninth terminal, and a tenth terminal that are sequentially arranged;
the sixth terminal is electrically connected to the eighth terminal; and
a functional device, where the functional device includes a third signal end, a fourth signal end, a third voltage end, and a fourth voltage end; the third signal end is electrically connected to the seventh terminal, the fourth signal end is electrically connected to the ninth terminal, the third voltage end is electrically connected to the sixth terminal and the eighth terminal, and the fourth voltage end is electrically connected to the tenth terminal.

According to a fourth aspect, an embodiment of this application provides a first electronic device. The first electronic device includes the first connection assembly according to of any one of the foregoing second aspect.

According to a fifth aspect, an embodiment of this application provides a second electronic device. The second electronic device includes the second connection assembly of the foregoing third aspect.

According to the system, the first electronic device, and the second electronic device provided in embodiments of this application, the first electronic device includes five terminals, and the third terminal is used as a centrosymmetric position. By using power supply polarity, the switching circuit can control the first voltage end to be connected to the first terminal and the second voltage end to be connected to the fifth terminal, or control the first voltage end to be connected to the fifth terminal and the second voltage end to be connected to the first terminal, thereby implementing adaptive switching of a power supply conduction path by using the switching circuit. By using the power supply polarity, the switching circuit can control the first signal end to be connected to the second terminal and the second signal end to be connected to the fourth terminal, or control the first signal end to be connected to the fourth terminal and the second signal end to be connected to the second terminal, thereby implementing adaptive switching of a signal channel by using the switching circuit. By using this solution, both the power supply conduction path and the signal channel can be determined by using the power supply polarity, thereby reducing a quantity of terminals of the first electronic device. Therefore, adaptive switching can be implemented by using few components, space occupied by the first electronic device is decreased, and costs are also reduced. The second electronic device includes five terminals, so that the third signal end is configured to perform transmission of the first differential signal, the fourth signal end is configured to perform transmission of the second differential signal, the third voltage end is configured to perform transmission of the first voltage, and the fourth voltage end is configured to perform transmission of the second voltage. Therefore, space occupied by the second electronic device is decreased, and costs are also reduced.

### BRIEF DESCRIPTION OF DRAWINGS

To describe the technical solutions in embodiments of this application more clearly, the following briefly describes the accompanying drawings for describing the embodiments. It is clear that, the accompanying drawings in the following description show merely some embodiments of this application, and a person of ordinary skill in the art may still derive other drawings from these accompanying drawings without creative efforts.
FIG. 1 is a schematic diagram of a device in a related technology;
FIG. 2 is a schematic diagram of a structure of a system according to an embodiment of this application;
FIG. 3 is a schematic diagram of a type of forward insertion according to an embodiment of this application;
FIG. 4 is a schematic diagram of a type of reverse insertion according to an embodiment of this application;
FIG. 5 is a schematic diagram of a first electronic device according to an embodiment of this application;
FIG. 6 is a schematic diagram of another type of forward insertion according to an embodiment of this application;
FIG. 7 is a schematic diagram of another type of reverse insertion according to an embodiment of this application;
FIG. 8 is a schematic diagram of another first electronic device according to an embodiment of this application;
FIG. 9 is a schematic diagram of a structure of another system according to an embodiment of this application;
FIG. 10 is a schematic diagram of another type of normal insertion according to an embodiment of this application;
FIG. 11 is a schematic diagram of another type of reverse insertion according to an embodiment of this application;
FIG. 12 is a schematic diagram of another first electronic device according to an embodiment of this application;
FIG. 13 is a schematic diagram of another type of normal insertion according to an embodiment of this application;
FIG. 14 is a schematic diagram of another type of reverse insertion according to an embodiment of this application;
FIG. 15 is a schematic diagram of another first electronic device according to an embodiment of this application; and
FIG. 16 is a schematic diagram of a type of insertion according to an embodiment of this application.

### DESCRIPTION OF EMBODIMENTS

To better understand the technical solutions of this application, the following describes embodiments of this application in detail with reference to the accompanying drawings.

It should be noted that the described embodiments are merely some rather than all of embodiments of this application. All other embodiments obtained by a person of ordinary skill in the art based on embodiments of this application without creative efforts shall fall within the protection scope of this application.

Terms used in embodiments of this application are merely for the purpose of describing specific embodiments, but are not intended to limit this application. The terms "a" and "the" of singular forms used in embodiments of this application and the appended claims of this application are also intended to include plural forms, unless otherwise specified in the context clearly.

It should be understood that the term "and/or" used in this specification is only an association relationship to describe related objects, and indicates that there may be three relationships. For example, A and/or B may indicate that only A exists, both A and B exist, and only B exists. In addition, the character "/" in this specification generally indicates that the related objects are in an "or" relationship.

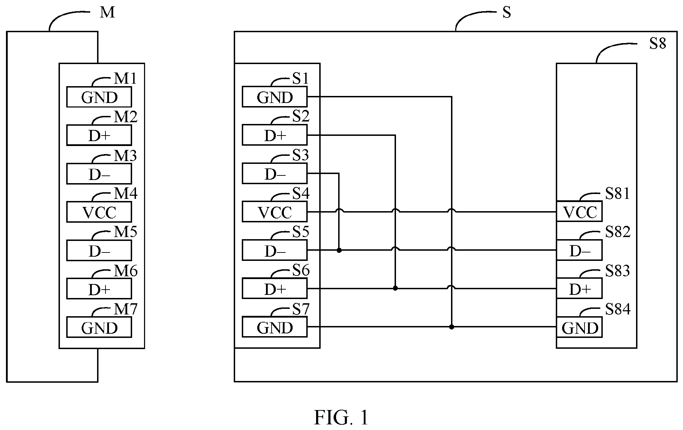

Before embodiments of this application are described, a related technology and a technical problem thereof are described first. FIG. 1 is a schematic diagram of a device in the related technology. As shown in FIG. 1, a peripheral module S and a terminal product M are shown. The peripheral module S and the terminal product M each include seven terminals, and the terminals may also be referred to as pins pin. The peripheral module S is separately arranged with seven terminals S1 to S7 in a top-to-bottom sequence. The peripheral module S further includes a peripheral module S8, and the peripheral module S8 includes four ports S81 to S84, respectively configured to perform transmission of a power supply voltage VCC, a second differential signal D-, a first differential signal D+, and a ground voltage GND. S81 is electrically connected to S4, S82 is electrically connected to S3 and S5, S83 is electrically connected to S2 and S6, and S84 is electrically connected to S1 and S7. The terminal product M is separately arranged with seven terminals M1 to M7 in a top-to-bottom sequence, respectively configured to perform transmission of GND, D+, D-, VCC, D-, D+, and GND. When the peripheral module S is connected to the terminal product M, regardless of forward insertion or reverse insertion between the seven terminals on a side of the terminal product M and the seven terminals on a side of the peripheral module S, transmission of a correct signal can be implemented, thereby implementing a forward and reverse insertion function. However, this may cause a quantity of terminals for insertion to be large, which results in large space occupation and high costs of the device.

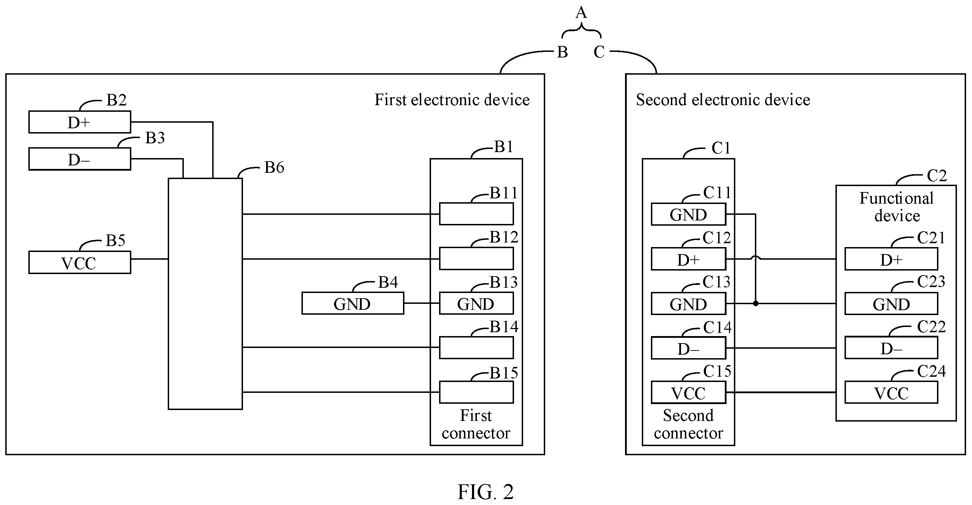

To reduce the large space occupation and high costs of the device, embodiments of this application provide a system, a first electronic device, and a second electronic device. FIG. 2 is a schematic diagram of a structure of a system according to an embodiment of this application. As shown in FIG. 2, the system A includes a first electronic device B and a second electronic device C.

The first electronic device B includes a first connector B1, where the first connector B1 includes a first terminal B11, a second terminal B12, a third terminal B13, a fourth terminal B14, and a fifth terminal B15 that are sequentially arranged. The first electronic device B further includes a first signal end B2, a second signal end B3, a first voltage end B4, a second voltage end B5, and a switching circuit B6, where the first voltage end B4 is configured to provide a first voltage, and the second voltage end B5 is configured to provide a second voltage. An example in which the first voltage is at a low level and the second voltage is at a high level is used for description first. At the first voltage end B4 is a low-level ground voltage GND, and at the second voltage end B5 is a high-level power supply voltage VCC. The first signal end B2 is configured to perform transmission of a first differential signal, the second signal end is configured to perform transmission of a second differential signal, and the first voltage end B4 is electrically connected to the third terminal B13.

The second electronic device C includes: a second connector C1, where the second connector C1 includes a sixth terminal C11, a seventh terminal C12, an eighth terminal C13, a ninth terminal C14, and a tenth terminal C15 that are sequentially arranged, and the sixth terminal C11 is electrically connected to the eighth terminal C13; and a functional device C2, where the functional device C2 includes a third signal end C21, a fourth signal end C22, a third voltage end C23, and a fourth voltage end C24. The third signal end C21 is electrically connected to the seventh terminal C12, the fourth signal end C22 is electrically connected to the ninth terminal C14, the third voltage end C23 is electrically connected to the sixth terminal C11 and the eighth terminal C13, and the fourth voltage end C24 is electrically connected to the tenth terminal C15. The third signal end C21 is configured to perform transmission of the first differential signal D+, the fourth signal end C22 is configured to perform transmission of the second differential signal D-, the third voltage end C23 is configured to perform transmission of the first voltage, and the fourth voltage end C24 is configured to perform transmission of the second voltage.

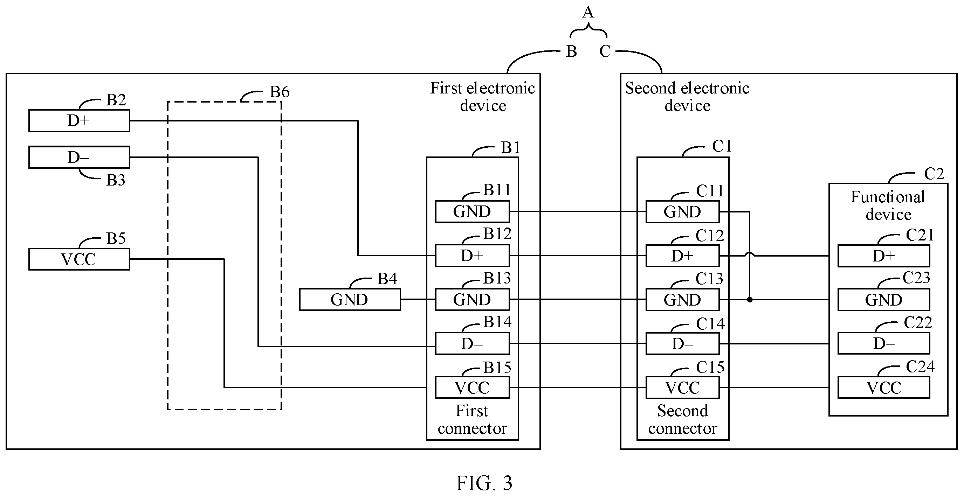

As shown in FIG. 3, in a case of forward insertion between the first connector B1 and the second connector C1, B11 to B15 are respectively connected to C11 to C15. Therefore, the first voltage end B4 is connected to the third voltage end C23 by using the third terminal B13 and the eighth terminal C13, to implement transmission of GND. In addition, the first voltage end B4 is connected to the first terminal B11 by using the third terminal B13, the eighth terminal C13, and the sixth terminal C11, and therefore, a voltage of the first terminal B11 is GND. The switching circuit B6 may determine, based on a condition that the voltage of the first terminal B11 is GND, that the first terminal B11 is connected to the first voltage end B4. The switching circuit B6 is configured to: when the first terminal B11 is connected to the first voltage end B4, control the first signal end B2 to be connected to the second terminal B12, that is, cause the first signal end B2 to be connected to the third signal end C21 by using the second terminal B12 and the seventh terminal C12, to implement transmission of the first differential signal D+; control the second signal end B3 to be connected to the fourth terminal B14, that is, cause the second signal end B3 to be connected to the fourth signal end C22 by using the fourth terminal B14 and the ninth terminal C14, to implement transmission of the second differential signal D-; and control the second voltage end B5 to be connected to the fifth terminal B15, that is, cause the second voltage end B5 to be connected to the fourth voltage end C24 by using the fifth terminal B15 and the tenth terminal C15, to implement transmission of VCC. It can be learned that through the forward insertion between the first connector B1 and the second connector C1, power may be supplied to the second electronic device C by using the first electronic device B, and data transmission may be implemented between the two.

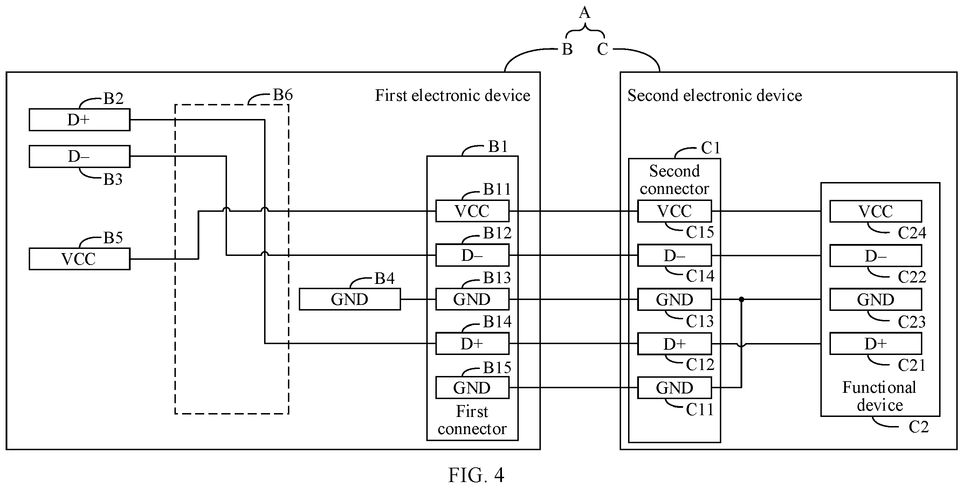

As shown in FIG. 4, in a case of reverse insertion between the first connector B1 and the second connector C1, B11 to B15 are respectively connected to C15 to C11. Therefore, the first voltage end B4 is connected to the third voltage end C23 by using the third terminal B13 and the eighth terminal C13, to implement transmission of GND. In addition, the first voltage end B4 is connected to the fifth terminal B15 by using the third terminal B13, the eighth terminal C13, and the sixth terminal C11, and therefore, a voltage of the fifth terminal B15 is GND. The switching circuit B6 may determine, based on a condition that the voltage of the fifth terminal B15 is GND, that the fifth terminal B15 is connected to the first voltage end B4. The switching circuit B6 is configured to: when the fifth terminal B15 is connected to the first voltage end B4, control the first signal end B2 to be connected to the fourth terminal B14, that is, cause the first signal end B2 be connected to the third signal end C21 by using the fourth terminal B14 and the seventh terminal C12, to implement transmission of the first differential signal D+; control the second signal end B3 to be connected to the second terminal B12, that is, cause the second signal end B3 to be connected to the fourth signal end C22 by using the second terminal B12 and the ninth terminal C14, to implement transmission of the second differential signal D-; and control the second voltage end B5 to be connected to the first terminal B11, that is, cause the second voltage end B5 to be connected to the fourth voltage end C24 by using the first terminal B11 and the tenth terminal C15, to implement transmission of VCC. It can be learned that through the reverse insertion between the first connector B1 and the second connector C1, alternatively power may be supplied to the second electronic device C by using the first electronic device B, and data transmission may be implemented between the two.

In embodiments of this application, the first electronic device and the second electronic device may be in a connected state, or may be in a to-be-connected state. The first electronic device includes, but is not limited to, a computer, a mobile phone, a wearable device, and the like. The second electronic device includes, but is not limited to, a pluggable camera device, a microphone device, a speaker device, and the like. Embodiments of this application may be applied to any circuit, connector, or interface that is of a power supply and a signal channel and on which adaptive direction selection needs to be performed. For example, the first electronic device includes a notebook computer, and the second electronic device includes a pluggable camera device. A connection interface between the first electronic device and the second electronic device may be another interface that uses at least two ports for supplying power and two ports for data transmission, for example, a universal serial bus (Universal Serial Bus, USB) interface, where the first electronic device is a master device and is referred to as a Master or a Host, and the second electronic device is a slave device and is referred to as a Slave or a Device.

In the system, the first electronic device, and the second electronic device in embodiments of this application, the first electronic device includes five terminals, and the third terminal is used as a centrosymmetric position. By using power supply polarity, the switching circuit can control the first voltage end to be connected to the first terminal and the second voltage end to be connected to the fifth terminal, or control the first voltage end to be connected to the fifth terminal and the second voltage end to be connected to the first terminal, thereby implementing adaptive switching of a power supply conduction path by using the switching circuit. By using the power supply polarity, the switching circuit can control the first signal end to be connected to the second terminal and the second signal end to be connected to the fourth terminal, or control the first signal end to be connected to the fourth terminal and the second signal end to be connected to the second terminal, thereby implementing adaptive switching of a signal channel by using the switching circuit. By using this solution, both the power supply conduction path and the signal channel can be determined by using the power supply polarity, thereby reducing a quantity of terminals of the first electronic device. Therefore, adaptive switching can be implemented by using few components, space occupied by connection terminals in the first electronic device is decreased, so that costs are reduced. The second electronic device includes five terminals, so that the third signal end is configured to perform transmission of the first differential signal, the fourth signal end is configured to perform transmission of the second differential signal, the third voltage end is configured to perform transmission of the first voltage, and the fourth voltage end is configured to perform transmission of the second voltage. Therefore, space occupied by terminals in the second electronic device is decreased, so that costs are reduced.

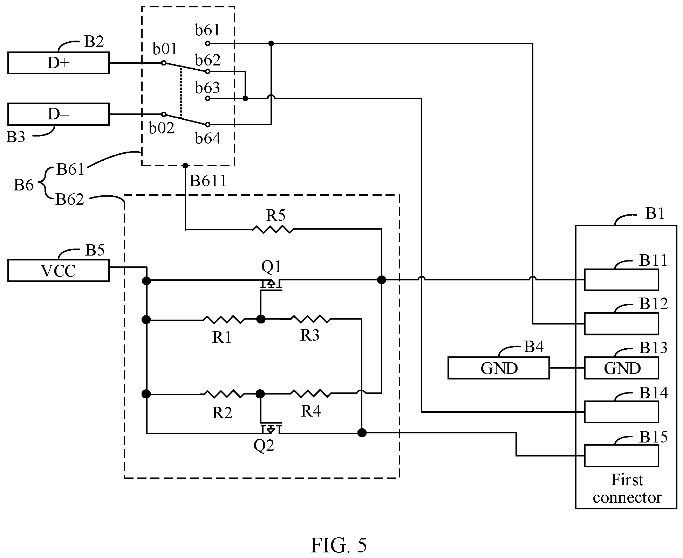

In a possible implementation, as shown in FIG. 5, FIG. 5 is a schematic diagram of a first electronic device according to an embodiment of this application. A switching circuit B6 includes a first switching module B61. The first switching module includes a selection signal end B611, and the selection signal end B611 is electrically connected to the first terminal B11.

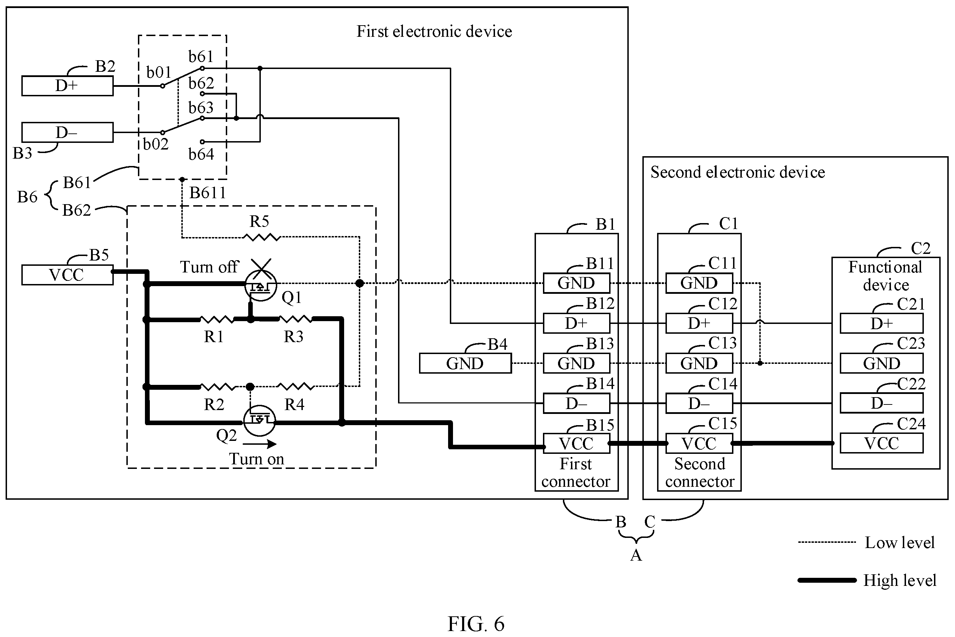

As shown in FIG. 6, when in the case of the forward insertion between the first connector B1 and the second connector C1, at the first terminal B11 and the selection signal end B611 is a first voltage, for example, GND. The first switching module B61 is configured to: when at the selection signal end B611 is the first voltage, for example, GND, control the first signal end B2 to be connected to the second terminal B12, and control the second signal end B3 to be connected to the fourth terminal B14. In other words, the first switching module B61 is used to implement that, based on the first voltage GND of the selection signal end B611, the second terminal B12 is caused to perform transmission of the first differential signal D+, and the fourth terminal B14 is caused to perform transmission of the second differential signal D-, so that a correct data transmission channel is implemented in the case of the forward insertion between the connectors. The switching circuit B6 further includes a second switching module B62. The second switching module B62 is configured to: when at the first terminal B11 is the first voltage, for example, GND, control the second voltage end B5 to be connected to the fifth terminal B15. In other words, the second switching module B61 is used to implement that, based on the first voltage GND of the first terminal B11, a second voltage VCC is provided to the fifth terminal B15, so that a correct power supply channel is provided in the case of the forward insertion between the connectors.

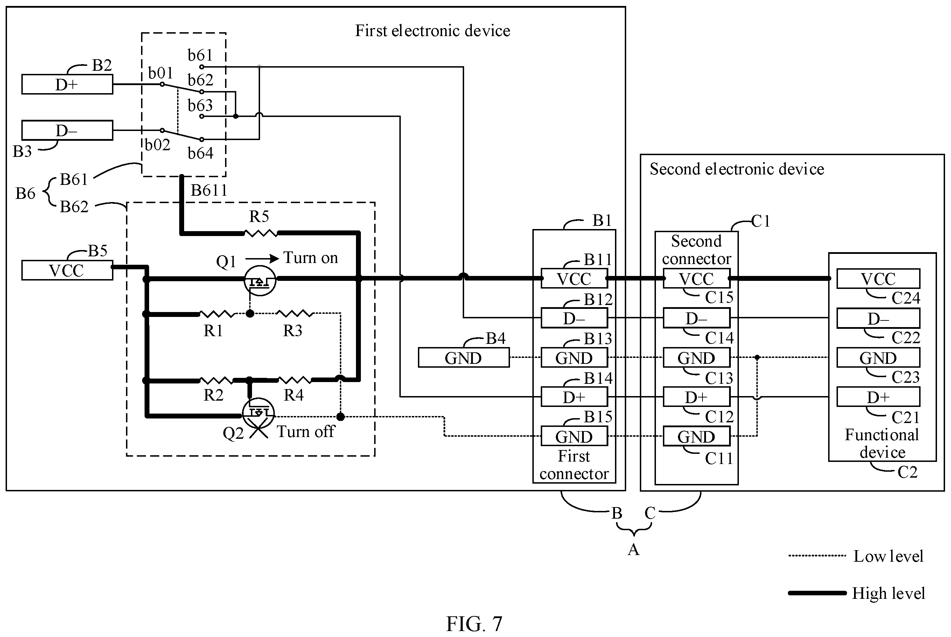

As shown in FIG. 7, in the case of the reverse insertion between the first connector B1 and the second connector C1, at the fifth terminal B15 is the first voltage GND. The second switching module B62 is configured to: when at the fifth terminal B15 is the first voltage GND, control the second voltage end B5 to be connected to the first terminal B11, and provide the second voltage VCC to the first terminal B11 and the selection signal end B611. In other words, the second switching module B62 is used to implement that, based on the first voltage GND of the fifth terminal B15, the second voltage VCC is provided to the first terminal B11, so that a correct power supply channel is provided in the case of the reverse insertion between the connectors. The first switching module B61 is configured to: when at the selection signal end B611 is the second voltage VCC, control the first signal end B2 to be connected to the fourth terminal B14, and control the second signal end B3 to be connected to the second terminal B12. In other words, the first switching module B61 is used to implement that, based on the second voltage VCC of the selection signal end B611, the second terminal B12 is caused to perform transmission of the second differential signal D-, and the fourth terminal B14 is caused to perform transmission of the first differential signal D+, so that a correct transmission channel is implemented in the case of the reverse insertion between the connectors.

In some embodiments, as shown in FIG. 5, the first switching module B61 may include a double-pole double-throw switch. The double-pole double-throw switch includes: a first input terminal b01 electrically connected to the first signal end B2, a second input terminal b02 electrically connected to the second signal end B3, a first output terminal b61 and a fourth output terminal b64 that are electrically connected to the second terminal B12, and a second output terminal b62 and a third output terminal b63 that are electrically connected to the fourth terminal B14. control endThe selection signal end B611 is a control end of the double-pole double-throw switch. As shown in FIG. 6, when at the selection signal end B611 is a first voltage, the first input terminal b01 is connected to the first output terminal b61, and the second input terminal b02 is connected to the third output terminal b63. As shown in FIG. 7, when at the selection signal end B611 is a second voltage, the first input terminal b01 is connected to the second output terminal b62, and the second input terminal b02 is connected to the fourth output terminal b64. It may be understood that, the first switching module B61 may alternatively be implemented by using another manner like a circuit. The first switching module B61 may alternatively include a universal serial bus (Universal Serial Bus, usb) switch. For example, the usb switch includes a usb 2.0 switch or a usb 3.0 switch. A specific implementation of the first switching module B61 is not limited in embodiments of this application, and the double-pole double-throw switch is merely an example.

In some embodiments, as shown in FIG. 5, the second switching module B62 may include: a first switch unit Q1, where a first end of the first switch unit Q1 is electrically connected to the second voltage end B5, and a second end of the first switch unit Q1 is electrically connected to the first terminal B11; a control end of the first switch unit Q1 is electrically connected to the fifth terminal B15 by using a third resistance module R3, and the control end of the first switch unit Q1 is electrically connected to the second voltage end B5 by using a first resistance module R1; and the first switch unit Q1 is turned on in response to a first voltage at the control end, and is turned off in response to a second voltage at the control end, that is, when at the control end of the first switch unit Q1 is the first voltage, it is turned on between the first end and the second end, and when at the control end of the first switch unit Q1 is the second voltage, it is turned off between the first end and the second end; a second switch unit Q2, where a first end of the second switch unit Q2 is electrically connected to the second voltage end B5, and a second end of the second switch unit Q2 is electrically connected to the fifth terminal B15; a control end of the second switch unit Q2 is electrically connected to the first terminal B11 by using a fourth resistance module R4, and the control end of the second switch unit Q2 is electrically connected to the second voltage end B5 by using a second resistance module R2; and the second switch unit Q2 is turned on in response to a first voltage at the control end, and is turned off in response to a second voltage at the control end, that is, when at the control end of the second switch unit Q2 is the first voltage, it is turned on between the first end and the second end, and when at the control end of the second switch unit Q2 is the second voltage, it is turned off between the first end and the second end; and a fifth resistance module R5, where the selection signal end B611 is electrically connected to the first terminal B11 by using the fifth resistance module R5. In another possible embodiment, the foregoing R3, R4, and R5 are components that may be omitted, and details are described in subsequent content.

In some embodiments, as shown in FIG. 5 to FIG. 7, the first voltage is at a low level, and the second voltage is at a high level. For example, at the first voltage end B4 is a ground voltage GND, and GND is, for example, 0 V; and at the second voltage end B5 is a high-level power supply voltage VCC, for example, 3.3 V.

In some embodiments, as shown in FIG. 5 to FIG. 7, the first switch unit Q1 and/or the second switch unit Q2 are/is a P-type transistor, for example, a positive channel metal oxide semiconducto (positive channel Metal Oxide Semiconducto, PMOS). One of a first terminal and a second terminal of the switch unit is a source electrode, another is a drain electrode, and the control terminal is a grid electrode. The P-type transistor is a component that is turned on at a low level and turned off at a high level, that is, in response to a high level of the grid electrode, turned off between the source electrode and the drain electrode, and in response to a low level of the grid electrode, turned on between the source electrode and the drain electrode. The foregoing resistance modules are respectively resistance components.

Specific working processes and principles of circuits in FIG. 5 to FIG. 7 are described below.

As shown in FIG. 5, when the first connector B1 is not inserted, as the first terminal B11 and the fifth terminal B15 are suspended, the first switch unit Q1 and the second switch unit Q2 do not meet a turn-on condition, a channel between VCC and B11 and B15 is turned off, and both the first terminal B11 and the fifth terminal B15 maintain a high level of weak pull-up because they are connected to the second voltage end B5 by using a resistance.

As shown in FIG. 6, in the case of the forward insertion between the first connector B1 and the second connector C1, as the first terminal B11 is connected to the first voltage end B4 by using the second electronic device, a voltage of the first terminal B11 is pulled low. In addition, as GND is strong pull-down, a gate electrode voltage of the second switch unit Q2 is pulled low, so that the second switch unit Q2 meets a turn-on condition and is turned on. A high level of the second voltage end B5 provides VCC to the fifth terminal B15 by using the turned-on second switch unit Q2, then provides VCC to the second electronic device by using the tenth terminal C15, and additionally provides GND to the second electronic device by using the eighth terminal C13, that is, a power supply path for the second electronic device is implemented. In this case, the first switch unit Q1 maintains a pulled-high gate electrode voltage, and therefore maintains a turned-off state. A bold channel in FIG. 6 is a high-level channel, that is, a VCC channel, and a dotted-line channel is a low-level channel, that is, a GND channel. The selection signal end B611 of the first switching module B61 is connected to the first terminal B11, and therefore is pulled low. In this way, the first input terminal b01 is connected to the first output terminal b61, and the second input terminal b02 is connected to the third output terminal b63, so that signal channels of the first signal end B2 and the second signal end B3 are correctly connected to the second electronic device, that is, a data signal path for the second electronic device is implemented.

As shown in FIG. 7, in the case of the reverse insertion between the first connector B1 and the second connector C1, as the fifth terminal B15 is connected to the first voltage end B4 by using the second electronic device, a voltage of the fifth terminal B15 is pulled low. In addition, as GND is strong pull-down, a gate electrode voltage of the first switch unit Q1 is pulled low, so that the first switch unit Q1 meets a turn-on condition and is turned on. A high level of the second voltage end B5 provides VCC to the first terminal B11 by using the turned-on first switch unit Q1, and provides VCC to the second electronic device by using the tenth terminal C15, and additionally provides GND to the second electronic device by using the eighth terminal C13, that is, a power supply path for the second electronic device is implemented. In this case, the second switch unit Q2 maintains a pulled-high gate electrode voltage, and therefore maintains a turned-off state. A bold channel in FIG. 7 is a high-level channel, that is, a VCC channel, and a dotted-line channel is a low-level channel, that is, a GND channel. The selection signal end B611 of the first switching module B61 is connected to the first terminal B11, and therefore is pulled high. In this way, the first input terminal b01 is connected to the second output terminal b62, and the second input terminal b02 is connected to the fourth input terminal b64, so that signal channels of the first signal end B2 and the second signal end B3 are correctly connected to the second electronic device, that is, a data signal path for the second electronic device is implemented.

It can be learned that paths of the first differential signal D+ and the second differential signal D- are adaptively switched by using the first switching module B61 based on an insertion direction detection result of the connectors. Two outermost terminals B11 and B15 in the first connector B1 are respectively used as a positive electrode path of a VCC power supply and a negative electrode path of a GND power supply. By detecting which terminal in B11 and B15 is connected to GND by using the second switching module B62, an insertion direction of the connectors is determined, and a power supply channel of another terminal is switched based on the insertion direction.

As shown in FIG. 5 to FIG. 7, the third resistance module R3, the fourth resistance module R4, and the fifth resistance module R5 may perform buffering between two components, to reduce impact of static electricity from a pin on a component in a circuit. For example, as shown in FIG. 5, the fourth resistance module R4 may perform buffering between the gate electrode of the second switch unit Q2 and a pin of the first terminal B11, to reduce voltage impact of static electricity from the pin of the first terminal B11 on the gate electrode of the second switch unit Q2. In addition, resistance values of R3 to R5 may be related to a parameter of a transistor. For example, a corresponding resistance value of the third resistance module R3 may be set based on a turn-on threshold of Q1, to cooperate with the first resistance module R1 to perform voltage division, so that a gate electrode of Q1 controls a turned-on state and a turned-off state based on a voltage obtained through the voltage division. It is assumed that VCC = 3.3 V, and GND = 0 V. In a state shown in FIG. 6, the gate electrode voltage of Q1 is caused to be 0.7 V through voltage division on R1 and R3, and is still at a low level and less than a threshold voltage of Q1. In this case, Q1 may be controlled to be turned off. A voltage division principle of R4 is similar, and details are not described again. In general, a resistance value of R3 is less than a resistance value of R1, and a resistance value of R4 is less than a resistance value of R2.

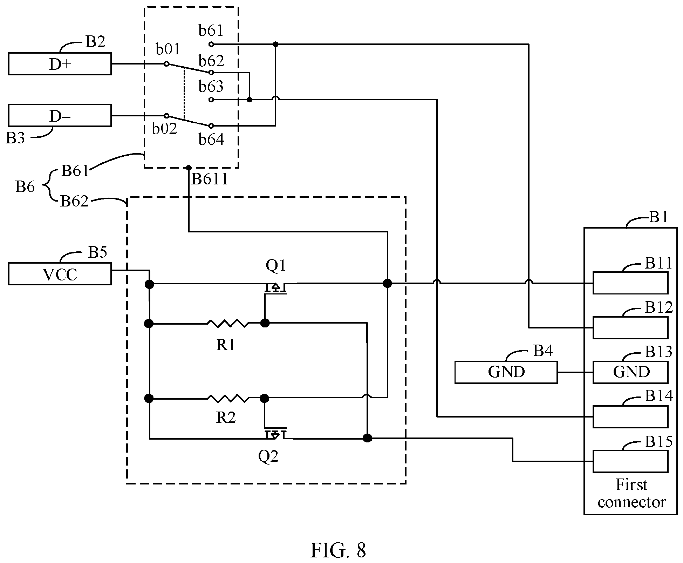

It can be learned that, the third resistance module R3, the fourth resistance module R4, and the fifth resistance module R5 are all optional resistance modules. For the second switching module B62, any one or more of the third resistance module R3, the fourth resistance module R4, and the fifth resistance module R5 may alternatively be omitted. For example, as shown in FIG. 8, the control end of the first switch unit Q1 may be electrically connected to the fifth terminal B15 directly, the gate electrode of the second switch unit Q2 may be electrically connected to the first terminal B11 directly, and the selection signal end B611 may be electrically connected to the first terminal B11 directly. A working principle of a circuit structure shown in FIG. 8 is the same as that in FIG. 5. For example, in the case of the forward insertion between the first connector B1 and the second connector C1, the gate electrode of Q2 is at the low level, so that Q2 is controlled to be turned on, and the gate electrode of Q1 is at a high level, so that Q1 is controlled to be turned off. In the case of the reverse insertion between the first connector B1 and the second connector C1, the gate electrode of Q1 is at the low level, so that Q1 is controlled to be turned on, and the gate electrode of Q2 is at the high level, so that Q2 is controlled to be turned off.

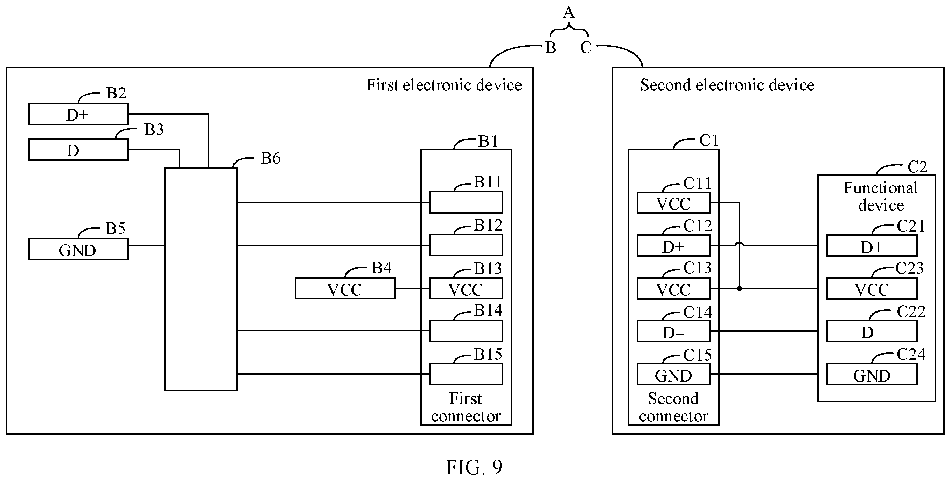

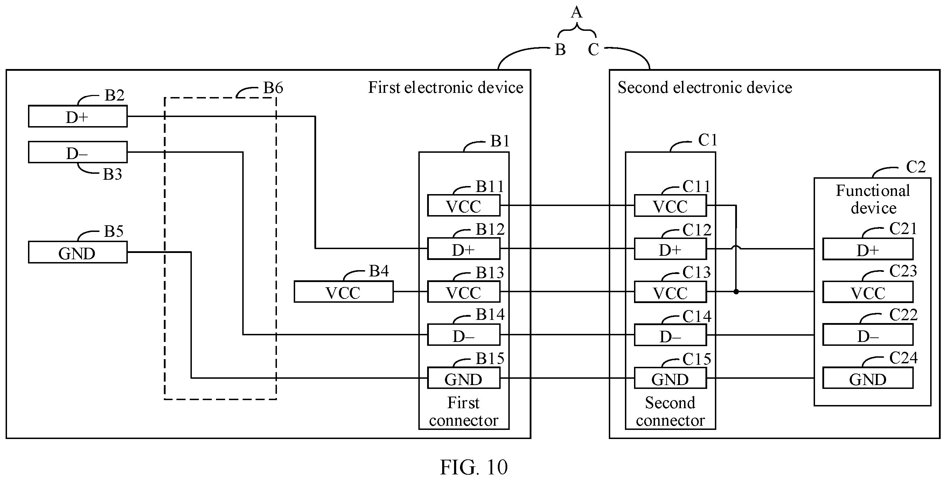

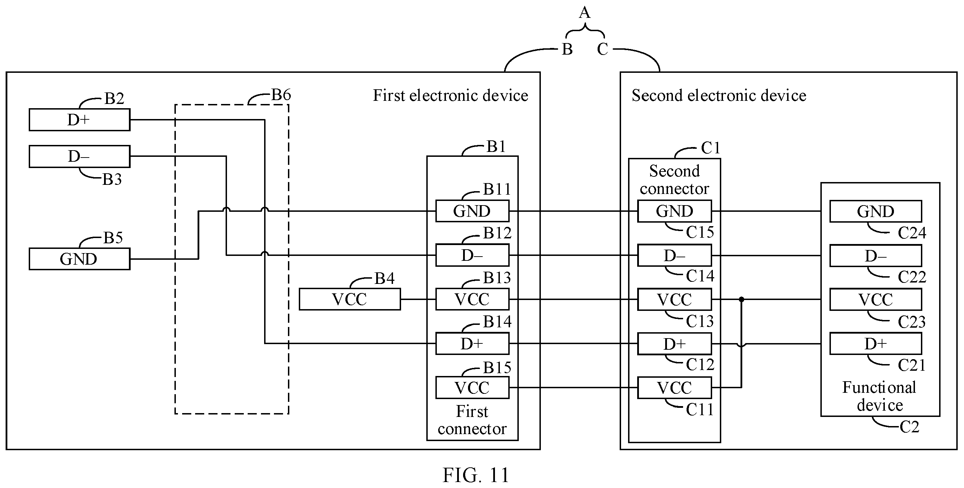

In some embodiments, as shown in FIG. 9 to FIG. 11, a first voltage is at a high level, and a second voltage is at a low level. For example, at the first voltage end B4 is a high-level power supply voltage VCC, and VCC is, for example, 3.3 V; and at the second voltage end B5 is a low-level ground voltage GND, and GND is, for example, 0 V. In other words, the first voltage end B4 is configured to provide VCC, the second voltage end B5 is configured to provide GND, the third voltage end C23 is configured to perform transmission of VCC, and the fourth voltage end C24 is configured to perform transmission of GND. The embodiments shown in FIG. 9 to FIG. 11 are similar to the embodiments shown in FIG. 2 to FIG. 4, and only differ in that VCC and GND are exchanged. In the embodiments shown in FIG. 2 to FIG. 4, transmission of GND is performed by using a terminal in the middle of the first connector B1, whether forward insertion or reverse insertion of the second connector C1 is determined by using GND voltages on terminals at both ends, and a corresponding power supply path and a corresponding signal path are provided based on an insertion direction. In the embodiments shown in FIG. 9 to FIG. 11, transmission of VCC is performed by using the terminal in the middle of the first connector B1, the forward insertion or the reverse insertion of the second connector C1 is determined by using VCC voltages on the terminals at the both ends, and a corresponding power supply path and a corresponding signal path are provided based on an insertion direction. A specific process is similar, and details are not described herein again.

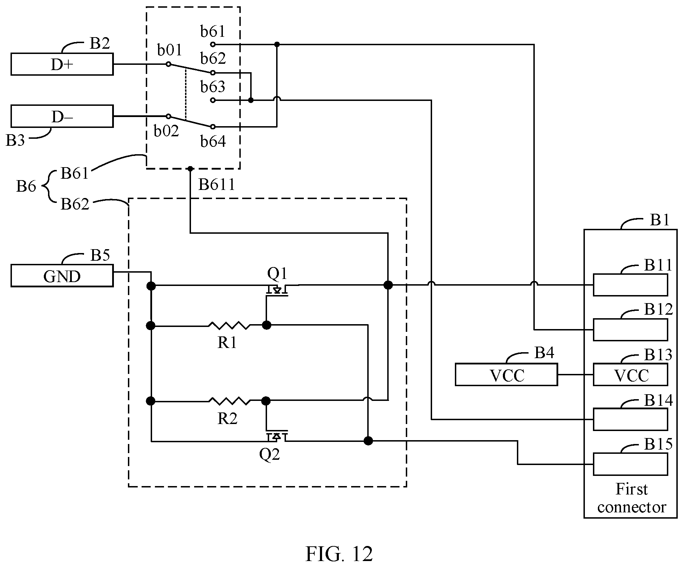

In some embodiments, as shown in FIG. 12 to FIG. 14, the first voltage is at a low level, and the second voltage is at a high level. For example, at the first voltage end B4 is a high-level power supply voltage VCC, for example, 3.3 V; and at the second voltage end B5 is a ground voltage GND, and GND is, for example, 0 V. The first switch unit Q1 and/or the second switch unit Q2 are/is an N-type transistor, for example, a negative channel metal oxide semiconductor field effect transistor (Negative channel Metal Oxide Semiconducto, NMOS). One of a first terminal and a second terminal of the switch unit is a source electrode, the other is a drain electrode, and the control end is a gate electrode. The N-type transistor is a component that is turned on at a high level and turned off at a low level, that is, in response to a low level of the gate electrode, turned off between the source electrode and the drain electrode, and in response to a high level of the gate electrode, turned on between the source electrode and the drain electrode. A structure shown in FIG. 12 is similar to that shown in FIG. 8, and only differs in that voltages provided by the first voltage end B4 and the second voltage end B5 are exchanged, and Q1 and Q2 are changed from P-type transistors to N-type transistors. Specific working processes and principles shown in circuits in FIG. 12 to FIG. 14 are described below.

As shown in FIG. 12, when the first connector B1 is not inserted, as the first terminal B11 and the fifth terminal B15 are suspended, the first switch unit Q1 and the second switch unit Q2 do not meet a turn-on condition, and a channel between VCC and B11 and B15 is turned off.

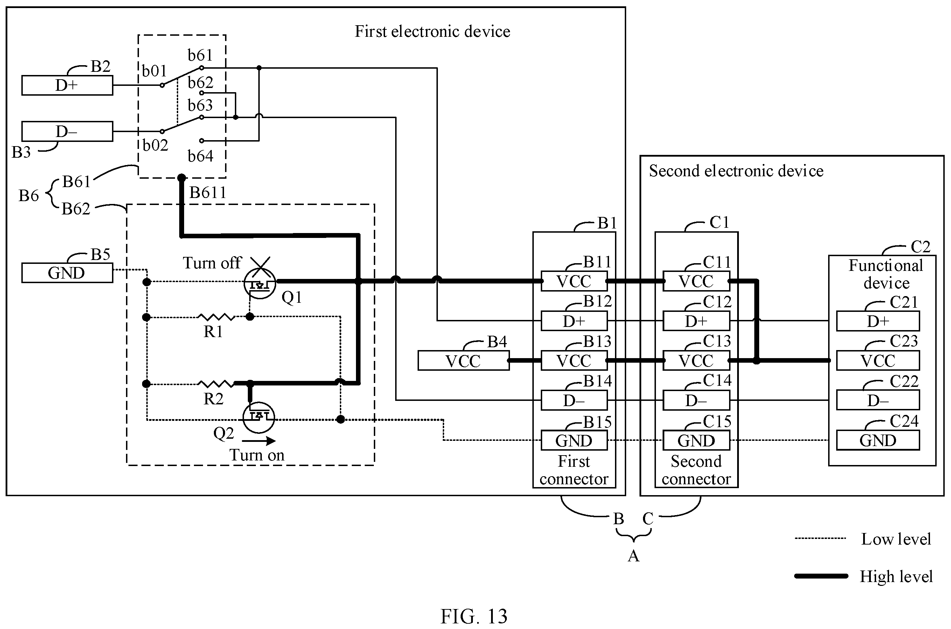

As shown in FIG. 13, in the case of the forward insertion between the first connector B1 and the second connector C1, as the first terminal B11 is connected to the first voltage end B4 by using the second electronic device, a voltage of the first terminal B11 is pulled high. In addition, as the first terminal B11 is directly connected to the gate electrode of the second switch unit Q2, the gate electrode voltage of the second switch unit Q2 is pulled high, so that the second switch unit Q2 meets a turn-on condition and is turned on. A low level of the second voltage end B5 provides GND to the fifth terminal B15 by using the turned-on second switch unit Q2, and provides GND to the second electronic device by using the tenth terminal C15, and additionally provides VCC to the second electronic device by using the eighth terminal C13, that is, a power supply path for the second electronic device is implemented. In this case, the first switch unit Q1 maintains a pulled-low gate electrode voltage, and therefore maintains a turned-off state. A bold channel in FIG. 13 is a high-level channel, that is, a VCC channel, and a dotted-line channel is a low-level channel, that is, a GND channel. The selection signal end B611 of the first switching module B61 is connected to the first terminal B11, and therefore is pulled high. In this way, the first input terminal b01 is connected to the first output terminal b61, and the second input terminal b02 is connected to the third input terminal b63, so that signal channels of the first signal end B2 and the second signal end B3 are correctly connected to the second electronic device, that is, a data signal path for the second electronic device is implemented.

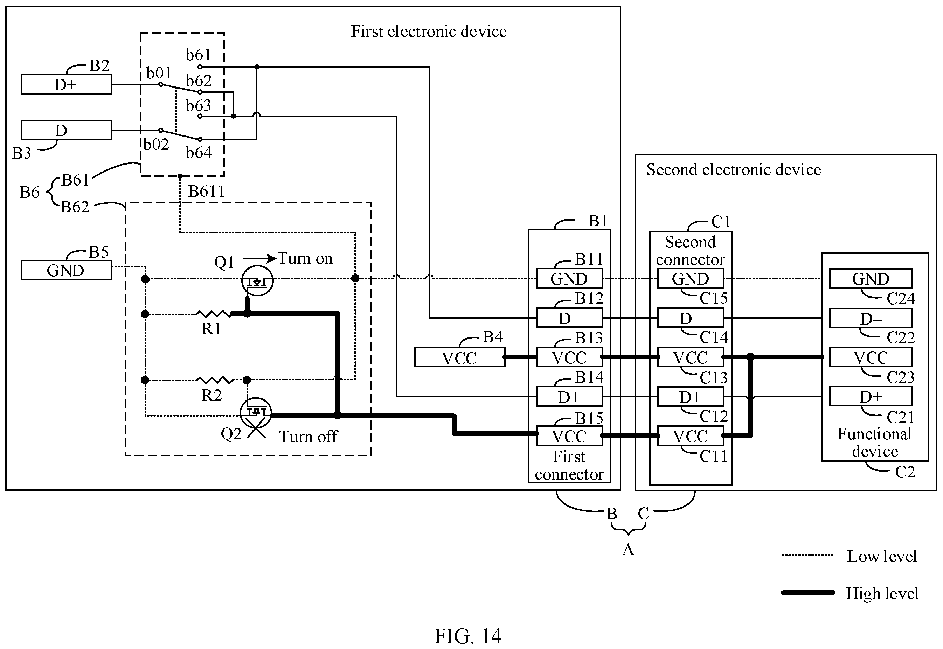

As shown in FIG. 14, in the case of the reverse insertion between the first connector B1 and the second connector C1, as the fifth terminal B15 is connected to the first voltage end B4 by using the second electronic device, a voltage of the fifth terminal B15 is pulled high. In addition, as the first terminal B15 is directly connected to the gate electrode of the first switch unit Q1, the gate electrode voltage of the first switch unit Q1 is pulled high, so that the first switch unit Q1 meets a turn-on condition and is turned on. A low level of the second voltage end B5 provides GND to the first terminal B11 by using the turned-on first switch unit Q1, and provides GND to the second electronic device by using the tenth terminal C15, and additionally provides VCC to the second electronic device by using the eighth terminal C13, that is, a power supply path for the second electronic device is implemented. In this case, the second switch unit Q2 maintains the pulled-low gate electrode voltage, and therefore maintains the turned-off state. A bold channel in FIG. 14 is a high-level channel, that is, a VCC channel, and a dotted-line channel is a low-level channel, that is, a GND channel. The selection signal end B611 of the first switching module B61 is connected to the first terminal B11, and therefore is pulled low. In this way, the first input terminal b01 is connected to the second output terminal b62, and the second input terminal b02 is connected to the fourth input terminal b64, so that signal channels of the first signal end B2 and the second signal end B3 are correctly connected to the second electronic device, that is, a data signal path for the second electronic device is implemented.

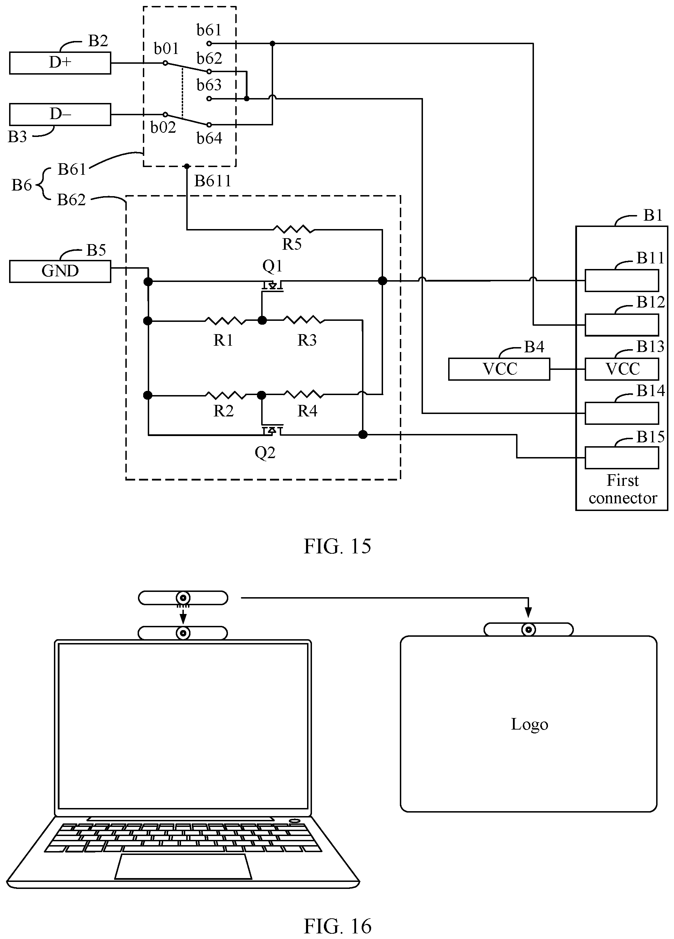

Based on FIG. 12 to FIG. 14, that is, based on that at the first voltage end B4 is a high-level power supply voltage VCC and at the second voltage end B5 is a ground voltage GND, as shown in FIG. 15, the gate electrode of Q1 is set to be electrically connected to the fifth terminal B15 by using the third resistance module R3, the gate electrode of Q2 is set to be electrically connected to the first terminal B11 by using the fourth resistance module R4, and the selection signal end B611 is set to be electrically connected to the first terminal B11 by using the fifth resistance module R5. A structure in FIG. 15 is similar to that in FIG. 5, and only differs in that voltages provided by the first voltage end B4 and the second voltage end B5 are exchanged.

It should be noted that the embodiments of FIG. 2 to FIG. 8 are all described by using an example in which at the first voltage end B4 is the ground voltage GND. In another possible embodiment, the first voltage end B4 may alternatively be another reference voltage, provided that a voltage difference with VCC can be formed to provide a power supply path. Similarly, the embodiments of FIG. 9 to FIG. 15 are all described by using an example in which at the second voltage end B5 is the ground voltage GND. In another possible embodiment, the second voltage end B5 may alternatively be another reference voltage, provided that a voltage difference with VCC can be formed to provide a power supply path.

Specific implementations of the first switch unit and the second switch unit are not limited in embodiments of this application. For example, the first switch unit and the second switch unit may be various types of switch components, such as a MOS transistor, a triode, and a load switch (Load switch).

In some embodiments, the second electronic device is a peripheral device connectable to the first electronic device. For example, the first electronic device is a notebook computer, and the second electronic device is a magnetic attachment camera device. FIG. 16 is a schematic diagram of insertion according to an embodiment of this application. As shown in FIG. 16, a notebook computer and a magnetic attachment camera device are converted from a to-be-connected state into a connected state. The left half of FIG. 16 shows forward insertion between the notebook computer and the magnetic attachment camera device, and the right half of FIG. 16 shows reverse insertion between the notebook computer and the magnetic attachment camera device. The notebook computer includes a screen part, and a top of the screen part includes the first connector B1. A bottom of the magnetic attachment camera device includes the second connector C1, and a functional device C2 includes a camera. When a camera side is consistent with a screen side of the screen part, the second connector C1 is aligned with and slowly approaches the first connector B1, the magnetic attachment camera device may detect magnetic automatic attachment, and after the attachment, the forward insertion between the notebook computer and the magnetic attachment camera device can be implemented. When the camera side is consistent with a protective housing side of the screen part, the second connector C1 is aligned with and slowly approaches the first connector B1, the magnetic attachment camera device may detect magnetic automatic attachment, and after the attachment, the reverse insertion between the notebook computer and the magnetic attachment camera device can be implemented. Therefore, the notebook computer includes five terminals, and the magnetic attachment camera device also includes five terminals. Regardless of the forward insertion or the reverse insertion between the notebook computer and the magnetic attachment camera device, an adaptive insertion direction of the notebook computer is implemented by using few components, to select a corresponding power supply path and a corresponding signal path to connect to the magnetic attachment camera device, thereby reducing space occupied by the notebook computer and the magnetic attachment camera device, and also reducing costs.

An embodiment of the present invention further provides a first connection assembly. A first electronic device B includes the first connection assembly, and the first connection assembly includes: a first connector B1, where the first connector B1 includes a first terminal B11, a second terminal B12, a third terminal B13, a fourth terminal B14, and a fifth terminal B15 that are sequentially arranged. The first electronic device B further includes a first signal end B2, a second signal end B3, a first voltage end B4, a second voltage end B5, and a switching circuit B6, where the first voltage end B4 is configured to provide a first voltage, and the second voltage end B5 is configured to provide a second voltage. The first voltage end B4 is electrically connected to the third terminal B13. The switching circuit B6 is configured to: when the first terminal B11 is connected to the first voltage end B4, control the first signal end B2 to be connected to the second terminal B12, control the second signal end B3 to be connected to the fourth terminal B14, and control the second voltage end B5 to be connected to the fifth terminal B15; and when the fifth terminal B15 is connected to the first voltage end B4, control the first signal end B2 to be connected to the fourth terminal B14, control the second signal end B3 to be connected to the second terminal B12, and control the second voltage end B5 to be connected to the first terminal B11. The various modules of the first connection assembly have been described in detail in the foregoing content, and details are not described herein again.

An embodiment of the present invention further provides a second connection assembly. The second electronic device C includes the second connection assembly, and the second connection assembly includes: a second connector C1, where the second connector C1 includes a sixth terminal C11, a seventh terminal C12, an eighth terminal C13, a ninth terminal C14, and a tenth terminal C15 that are sequentially arranged, and the sixth terminal C11 is electrically connected to the eighth terminal C13; and a functional device C2, where the functional device C2 includes a third signal end C21, a fourth signal end C22, a third voltage end C23, and a fourth voltage end C24. The third signal end C21 is electrically connected to the seventh terminal C12, the fourth signal end C22 is electrically connected to the ninth terminal C14, the third voltage end C23 is electrically connected to the sixth terminal C11 and the eighth terminal C13, and the fourth voltage end C24 is electrically connected to the tenth terminal C15. The various modules of the second connection assembly have been described in detail in the foregoing content, and details are not described herein again.

For same or similar parts in the embodiments in this specification, mutual reference may be made. Especially, system embodiments, first electronic device embodiments, and second electronic device embodiments are basically similar to the system embodiments, and therefore are described briefly. For related parts, refer to descriptions in the system embodiments.

## Claims

1. A system, comprising a first electronic device and a second electronic device, wherein
the first electronic device comprises:
a first connector, wherein the first connector comprises a first terminal, a second terminal, a third terminal, a fourth terminal, and a fifth terminal that are sequentially arranged; and
a first signal end, a second signal end, a first voltage end, a second voltage end, and a switching circuit, wherein the first voltage end is configured to provide a first voltage, the second voltage end is configured to provide a second voltage, the first signal end is configured to perform transmission of a first differential signal, and the second signal end is configured to perform transmission of a second differential signal, wherein
the first voltage end is electrically connected to the third terminal; and
the switching circuit is configured to: when the first terminal is connected to the first voltage end, control the first signal end to be connected to the second terminal, control the second signal end to be connected to the fourth terminal, and control the second voltage end to be connected to the fifth terminal; and control, and when the fifth terminal is connected to the first voltage end, control the first signal end to be connected to the fourth terminal, control the second signal end to be connected to the second terminal, and control the second voltage end to be connected to the first terminal; and
the second electronic device comprises:
a second connector, wherein the second connector comprises a sixth terminal, a seventh terminal, an eighth terminal, a ninth terminal, and a tenth terminal that are sequentially arranged, wherein
the sixth terminal is electrically connected to the eighth terminal; and
a functional device, wherein the functional device comprises a third signal end, a fourth signal end, a third voltage end, and a fourth voltage end; the third signal end is electrically connected to the seventh terminal, the fourth signal end is electrically connected to the ninth terminal, the third voltage end is electrically connected to the sixth terminal and the eighth terminal, and the fourth voltage end is electrically connected to the tenth terminal, wherein
the third signal end is configured to perform transmission of the first differential signal, the fourth signal end is configured to perform transmission of the second differential signal, the third voltage end is configured to perform transmission of the first voltage, and the fourth voltage end is configured to perform transmission of the second voltage.

2. The system according to claim 1, wherein
the switching circuit comprises:
a first switching module, wherein the first switching module comprises a selection signal end, and the selection signal end is electrically connected to the first terminal; and the first switching module is configured to: when at the selection signal end is the first voltage, control the first signal end to be connected to the second terminal and control the second signal end to be connected to the fourth terminal, and when at the selection signal end is the second voltage, control the first signal end to be connected to the fourth terminal and control the second signal end to be connected to the second terminal; and
a second switching module, wherein the second switching module is configured to: when at the first terminal is the first voltage, control the second voltage end to be connected to the fifth terminal, and when at the fifth terminal is the first voltage, control the second voltage end to be connected to the first terminal.

3. The system according to claim 2, wherein
the second switching module comprises:
a first switch unit, wherein a first terminal of the first switch unit is electrically connected to the second voltage end, a second terminal of the first switch unit is electrically connected to the first terminal, a control end of the first switch unit is electrically connected to the fifth terminal, the control end of the first switch unit is electrically connected to the second voltage end through a first resistance module, and the first switch unit is turned on in response to the first voltage at the control end and turned off in response to the second voltage at the control end; and
a second switch unit, wherein a first terminal of the second switch unit is electrically connected to the second voltage end, a second terminal of the second switch unit is electrically connected to the fifth terminal, a control end of the second switch unit is electrically connected to the first terminal, the control end of the second switch unit is electrically connected to the second voltage end through a second resistance module, and the second switch unit is turned on in response to the first voltage at the control end and turned off in response to the second voltage at the control end.

4. The system according to claim 3, wherein
the second switching module further comprises:
a third resistance module, wherein the control end of the first switch unit is electrically connected to the fifth terminal through the third resistance module;
a fourth resistance module, wherein the control end of the second switch unit is electrically connected to the first terminal through the fourth resistance module; and
a fifth resistance module, wherein the selection signal end is electrically connected to the first terminal through the fifth resistance module.

5. The system according to claim 4, wherein
the first voltage is at a low level, and the second voltage is at a high level; or
the first voltage is at a high level, and the second voltage is at a low level.

6. The system according to any one of claims 1 to 6, wherein
the first electronic device is a notebook computer, and the second electronic device is a pluggable camera device.

7. A first connection assembly, wherein the first connection assembly comprises:
a first connector, wherein the first connector comprises a first terminal, a second terminal, a third terminal, a fourth terminal, and a fifth terminal that are sequentially arranged; and
a first signal end, a second signal end, a first voltage end, a second voltage end, and a switching circuit, wherein the first voltage end is configured to provide a first voltage, and the second voltage end is configured to provide a second voltage, wherein
the first voltage end is electrically connected to the third terminal; and
the switching circuit is configured to: when the first terminal is connected to the first voltage end, control the first signal end to be connected to the second terminal, control the second signal end to be connected to the fourth terminal, and control the second voltage end to be connected to the fifth terminal; and when the fifth terminal is connected to the first voltage end, control the first signal end to be connected to the fourth terminal, control the second signal end to be connected to the second terminal, and control the second voltage end to be connected to the first terminal.

8. The first connection assembly according to claim 7, wherein
the switching circuit comprises:
a first switching module, wherein the first switching module comprises a selection signal end, and the selection signal end is electrically connected to the first terminal; and the first switching module is configured to: when at the selection signal end is the first voltage, control the first signal end to be connected to the second terminal and control the second signal end to be connected to the fourth terminal, and when at the selection signal end is the second voltage, control the first signal end to be connected to the fourth terminal and control the second signal end to be connected to the second terminal; and
a second switching module, wherein the second switching module is configured to: when at the first terminal is the first voltage, control the second voltage end to be connected to the fifth terminal, and when at the fifth terminal is the first voltage, control the second voltage end to be connected to the first terminal.

9. The first connection assembly according to claim 8, wherein
the second switching module comprises:
a first switch unit, wherein a first terminal of the first switch unit is electrically connected to the second voltage end, a second terminal of the first switch unit is electrically connected to the first terminal, a control end of the first switch unit is electrically connected to the fifth terminal, the control end of the first switch unit is electrically connected to the second voltage end through a first resistance module, and the first switch unit is turned on in response to the first voltage at the control end and turned off in response to the second voltage at the control end; and
a second switch unit, wherein a first terminal of the second switch unit is electrically connected to the second voltage end, a second terminal of the second switch unit is electrically connected to the fifth terminal, a control end of the second switch unit is electrically connected to the first terminal, the control end of the second switch unit is electrically connected to the second voltage end through a second resistance module, and the second switch unit is turned on in response to the first voltage at the control end and turned off in response to the second voltage at the control end.

10. The first connection assembly according to claim 9, wherein
the second switching module further comprises:
a third resistance module, wherein the control end of the first switch unit is electrically connected to the fifth terminal through the third resistance module;
a fourth resistance module, wherein the control end of the second switch unit is electrically connected to the first terminal through the fourth resistance module; and
a fifth resistance module, wherein the selection signal end is electrically connected to the first terminal through the fifth resistance module.

11. The first connection assembly according to claim 10, wherein
the first voltage is at a low level, and the second voltage is at a high level; or
the first voltage is at a high level, and the second voltage is at a low level.

12. A second connection assembly, wherein the second connection assembly comprises:
a second connector, wherein the second connector comprises a sixth terminal, a seventh terminal, an eighth terminal, a ninth terminal, and a tenth terminal that are sequentially arranged, wherein
the sixth terminal is electrically connected to the eighth terminal; and
a functional device, wherein the functional device comprises a third signal end, a fourth signal end, a third voltage end, and a fourth voltage end; the third signal end is electrically connected to the seventh terminal, the fourth signal end is electrically connected to the ninth terminal, the third voltage end is electrically connected to the sixth terminal and the eighth terminal, and the fourth voltage end is electrically connected to the tenth terminal.

13. A first electronic device, wherein the first electronic device comprises the first connection assembly according to any one of claims 7 to 11.

14. A second electronic device, wherein the second electronic device comprises the second connection assembly according to claim 12.
